# EUROPEAN PATENT SPECIFICATION

(11) **EP 4 310 540 B1**
(45) Date of publication and mention of the grant of the patent: **10.06.2026**
(21) Application number: 23184865.6
(22) Date of filing: 11.07.2023
(51) Int. Cl.: G01S 7/481, G01S 7/484, G01S 17/87, G01S 7/4863, G01S 7/4865

(54) **CONTROL METHOD AND DEVICE FOR MULTICHANNEL LASER EMISSION, AND COMPUTER READABLE STORAGE MEDIUM**
STEUERUNGSVERFAHREN UND -VORRICHTUNG FÜR MEHRKANALIGE LASEREMISSION UND COMPUTERLESBARES SPEICHERMEDIUM
PROCÉDÉ ET DISPOSITIF DE COMMANDE D'ÉMISSION LASER MULTICANAL, ET SUPPORT D'INFORMATIONS LISIBLE PAR ORDINATEUR

(30) Priority: 15.07.2022 CN 202210833777
(43) Date of publication of application: 24.01.2024
(73) Proprietor: Suteng Innovation Technology Co., Ltd, Shenzhen City Guangdong 518000 (CN)
(72) Inventor: JIANG, Shen, Shenzhen City (CN)
(74) Representative: Ran, Handong

(56) References cited:
- US-A1- 2022 035 011
- US-A1- 2022 120 867

## Description

### TECHNICAL FIELD

The present application relates to the field of LiDAR, and in particular, to a control method and device for multichannel laser emission, a multichannel LiDAR device, and a computer readable storage medium.

### TECHNICAL BACKGROUND

LiDAR consists of an emitting system, a receiving system, a scanning control system, and a data processing system. The LiDAR measures a distance by measuring a time difference between an emergent detection laser and a received echo laser, and has the advantages of high resolution, high sensitivity, strong anti-interference ability and being independent of lighting conditions, etc. The LiDAR has been widely used in the fields of autonomous driving, a logistics vehicle, a robot, vehicle-road coordination, and public intelligent transportation.

Multichannel LiDAR can scan a plurality of channels simultaneously, can extend a field of view, and is currently widely used in LiDAR products. Because the multichannel LiDAR emits and receives laser beams simultaneously, a crosstalk occurs between the channels. A spurious image caused by the crosstalk causes a detection error. The related art solves the crosstalk occurred during the emission of a multi-line laser by physical optical isolation. However, a solution for the physical optical isolation requires an additional hardware or changes in the structure of a LiDAR product, which means an increase in costs.
US 2022/035011 A1 discloses a LIDAR system comprising: a light transmission module having an emitter to emit a light pulse during each of a plurality of shots in response to a trigger pulse; a light sensing module having at least one light sensor channel to receive light and configured to generate, responsive to the trigger pulse, a histogram of received light intensity as a function of time for a sequence of time bins, the light sensing module further having a first memory circuit configured to accumulate the histogram across the plurality of shots.
US 2022/120867 A1 discloses an emitting unit of a lidar including a laser emitter array emitting detection light beams, and an emitting controller coupled to the laser emitter array. The emitting controller controls the laser emitter array to emit a first detection light beam in a first mode and emit a second detection light beam in a second mode before or after emitting the first detection light beam.

### SUMMARY

To solve or partially solve the problems in the related art, the present application provides a control method and device for multichannel laser emission, and a computer readable storage medium, which prevent a crosstalk between the channels during the detection of the multichannel laser without increasing the cost of a firmware. The invention is set out in the appended set of claims.

A first aspect of the present application provides a control method for multichannel laser emission according to claim 1.

A second aspect of the present application provides a device for controlling multichannel laser emission according to claim 8.

A third aspect of the present application provides a multichannel LiDAR device, including:
a processor; and
a storage having executable codes stored thereon, where when executed by the processor, the executable codes cause the processor to execute the method as described above

A fourth aspect of the present application provides a computer readable storage medium having executable codes stored thereon. When executed by a processor of a multichannel LiDAR device, the executable codes cause the processor to execute the method as described above.

Based on the technical solution provided by the present application, the emission of secondary emergent lasers of a plurality of channels of multichannel LiDAR device is controlled in a time-sharing manner during an operation cycle of the multichannel LiDAR device. A primary emergent laser is emitted at the preset reference moment of the channel or the emission of the primary emergent laser is encoded and modulated according to the detection result of the secondary emergent lasers of the plurality of channels. The detection cycle of each of the channels of the LiDAR device includes a secondary emission cycle and a primary emission cycle. The LiDAR device of the plurality of channels includes the plurality of secondary emission and primary emission cycles. The duration of the operation cycle of the LiDAR device is limited by the frame rate of a system. The emission of the secondary emergent lasers of the plurality of channels is controlled in a time-sharing manner. The primary emergent laser is emitted at the preset reference moment of the channel or the emission of the primary emergent laser is encoded and modulated. Therefore, the secondary emission and primary emission cycles of the plurality of channels can be spaced apart in time, or a reflection laser of this channel can be identified by encoding and decoding, which can prevent a crosstalk between the channels during the operation of the multichannel laser without increasing the cost.

It should be understood that the above general descriptions and the following detailed descriptions are only exemplary and explanatory and impose no limitation on the present application, which is limited only by the claims.

### BRIEF DESCRIPTION OF THE DRAWINGS

Exemplary embodiments of the present application are described more specifically with reference to the accompanying drawings, to more expressly illustrate the above and other objectives, features and advantages of the present application. In the exemplary embodiments of the present application, the same reference numerals generally represent the same components.
Fig. 1a is a schematic structural diagram of a multichannel LiDAR provided in an embodiment of the present application;
Fig. 1b is a schematic diagram of the splicing of the field of view formed by the channel of LiDAR including five channels provided in an embodiment of the present application;
Fig. 2 is a flow diagram of a control method for multichannel laser emission provided in an embodiment of the present application;
Fig. 3a is a schematic diagram of the timing of the emission of a primary emergent laser provided in the present application when all five channels of LiDAR adopt a near-range operation mode;
Fig. 3b is a schematic diagram of the timing of the emission of a primary emergent laser provided in the present application when five channels of LiDAR partially adopt a near-range operation mode and partially adopt a long-range operation mode;
Fig. 4 is a schematic structural diagram of a control device for multichannel laser emission provided in an embodiment of the present application;
Fig. 5 is a schematic structural diagram of an electronic apparatus provided in an embodiment of the present application.

### DETAILED DESCRIPTION OF EMBODIMENTS

The following describes embodiments of the present application more specifically with reference to the accompanying drawings.

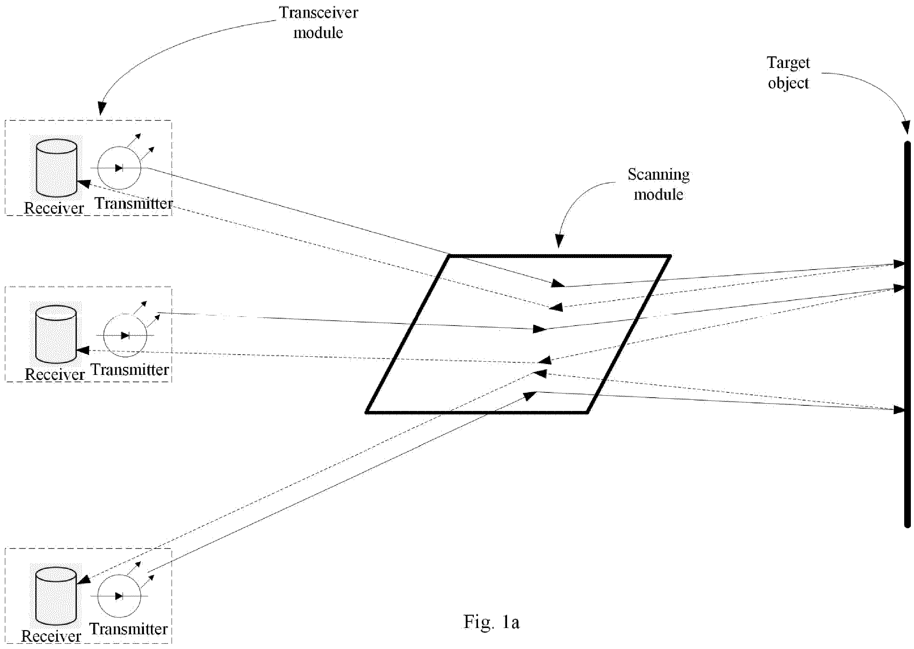

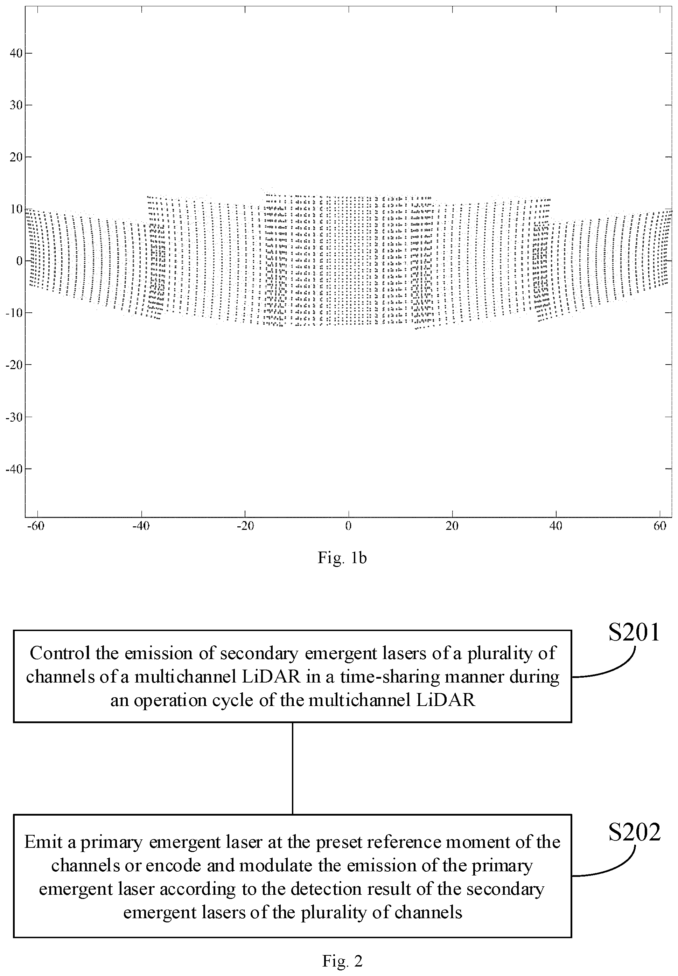

Multichannel LiDAR can scan a plurality of channels simultaneously, extend a field of view of the LiDAR, and is currently widely used in a LiDAR product. Taking multichannel LiDAR scanning with MEMS (Micro-Electro-Mechanical System) as an example, as shown in Fig. 1a, the multichannel LiDAR includes a transceiver module and a scanning module. The scanning module adopts a MEMS galvanometer. An emitter of the transceiver module emits an emergent laser (shown as a straight solid line with an arrow in the figure), which is emitted to the scanning module. The MEMS galvanometer of the scanning module moves to achieve scanning and covers the whole field of view. The emergent laser is reflected by an object and returns as a reflection laser (as shown by a straight dashed line with an arrow in the figure). Optical paths of the reflection laser and the emergent laser are coaxial. The reflection laser returns via a path of the scanning module - the transceiver module and is received by a receiver in the transceiver module. Due to the limited deflection angle of the MEMS galvanometer, an optical path of one transceiver module covers a smaller field of view after passing through the scanning module. To expand the field of view of the LiDAR, the plurality of transceiver modules are arranged to share one MEMS galvanometer for scanning, forming the effect of the splicing of the plurality of fields of view. Fig. 1b shows a schematic diagram of the splicing of the field of view formed by the channels of the LiDAR containing the five channels. In this way, each of the transceiver modules is one channel of the LiDAR. Light rays (the emergent and reflection lasers) between the plurality of channels are isolated from each other.

On the one hand, because the frame rate of a system determines the limited duration of a detection cycle, and the duration of an analysis region (including primary emission and secondary emission analysis regions) of each of the channels is also related to the ranging capability of the system and thus the duration of the detection cycle is fixed. Therefore, if the analysis regions of different channels overlap in time, this leads to a crosstalk between optical paths of the channels, i.e., each of the channels may receive a reflection laser that does not correspond to the channel. On the other hand, when emitting the emergent laser, the multichannel LiDAR adopts drive solutions of energy charging, energy transferring and energy enabling. A timing control becomes more difficult because charging and transferring energy take a period of time. If there is no any better timing control solution, the crosstalk between the channels is also caused. The related art solves a crosstalk between the plurality of channels by physical optical isolation. However, a solution for the physical optical isolation requires an additional hardware or changes in the structure of the LiDAR product, which means an increase in costs.

In response to the above problems, an embodiment of the present application provides a control method for multichannel laser emission, which can prevent a crosstalk between channels during the detection of the multichannel laser without increasing the cost of a firmware.

The technical solutions of embodiments of the present application are described in detail below in conjunction with the drawings.

Fig. 2 shows a flow diagram of the method for controlling the emission of the multichannel laser shown in an embodiment of the present application. The method mainly includes steps S201 to S202, which are illustrated as follows.

Step S201: controlling emission of secondary emergent lasers of a plurality of channels of a multichannel LiDAR in a time-sharing manner during an operation cycle of the multichannel LiDAR.

Because the multichannel LiDAR scans through the plurality of channels to complete one detection task, a process which the plurality of channels of the multichannel LiDAR complete one detection task can be defined as one operation cycle of the multichannel LiDAR. For example, it is assumed that the multichannel LiDAR has five channels CH1-CH5, a period of time from the same preset moment (for example, the preset moment can be the moment of the generation of initial signals of the galvanometer or the moment when it is generated by an internal clock of the multichannel LiDAR) of the five channels CH1-CH5 to the end of the completion of one detection task can be called as one operation cycle of the multichannel LiDAR.

Regarding each of the channels of the multichannel LiDAR, the detection cycle includes a secondary emission cycle and a primary emission cycle. A secondary emergent laser is emitted, and a corresponding reflection laser is received during the secondary emission cycle. A primary emergent laser is also emitted, and a corresponding reflection laser is received during the primary emission cycle. The detection result of the secondary emission cycle and the detection result of the primary emission cycle are spliced together to obtain one detection result covering a full-ranging scope. When a laser device emits an emergent laser, ranging begins. Then, a receiver is turned on in an operation state until the duration of time of an analysis region is passed, at which time the receiver is turned off. The duration of the analysis region is greater than or equal to the flight time of emergent laser photons to and back from the farthest detection distance to ensure that photons returned from the farthest detection distance can be received. The higher the emission power of the emergent laser, the greater the farthest detection distance, and the longer the corresponding analysis region. As mentioned before, the output power of the secondary emergent laser is lower and a secondary emission analysis region is shorter. The secondary emergent laser of each of the channels has the same emergent power. The duration of the secondary emission analysis region for each of the channels is a second preset time.

As one embodiment of the present application, the emission of the secondary emergent lasers of the plurality of channels of the multichannel LiDAR is controlled in the time-sharing manner, which can be to sequentially control the secondary emergent lasers of the plurality of channels to be emitted at intervals of a first preset time. Taking as an example the above multichannel LiDAR with the five channels CH1-CH5, a secondary emergent laser of CH1 is emitted at the moment of T1. A secondary emergent laser of CH2 is emitted at the moment of T2, and so on, and a secondary emergent laser of CH5 is emitted at the moment of T5. The interval between emission moments of secondary emergent lasers of adjacent channels is the first preset time, that is, the interval between T1 and T2 is the first preset time; the interval between T2 and T3 is the first preset time; the interval between T3 and T4 is the first preset time, and the interval between T4 and T5 is the first preset time.

The first preset time is greater than or equal to the second preset time. If the second preset time is greater than the first preset time, the secondary emission analysis regions of different channels overlap in time. When the receiver of the previous channel (e.g., CH1) still works, the secondary emergent laser of the next channel (e.g., CH2) begins to emit. At this time, the reflection laser received by a receiver of CH1 can be a reflection laser corresponding to the secondary emergent laser of CH1 or a reflection laser corresponding to the secondary emergent laser of CH2. However, the receiver of CH1 cannot distinguish which channel the received reflection laser corresponds specifically to the emergent laser, so a crosstalk between the CH1 and CH2 occurs. Therefore, the first preset time is greater than or equal to the second preset time. Otherwise, conditions for the crosstalk between the channels can be created, which increases the probability of the crosstalk between the channels.

The secondary emergent lasers of the plurality of channels are emitted sequentially. A secondary emission detection cycle occupies 5 times the first preset time. As can be seen from the foregoing, the multichannel LiDAR has a limited duration of the operation cycle. The minimum of the first preset time can be equal to the second preset time. The second preset time, i.e., the duration of the secondary emission analysis region, is related to the output power of the secondary emergent laser. Thus, in a case where the system parameters of the multichannel LiDAR are determined, the second preset time is a known and fixed amount.

Because the secondary emission analysis region is shorter, the time of five secondary emission detection cycles does not occupy much time in the working cycle of the multichannel LiDAR. Therefore, the emission of the secondary emergent lasers of the plurality of channels can be controlled in the time-sharing manner, thereby avoiding the crosstalk between the plurality of channels during the secondary emission detection cycle.

In an optical path of the LiDAR, a small portion of the energy of the emergent laser emitted by the laser device passes through directly a stray path (i.e., a stray light) and reaches the receiver. An echo laser received by the receiver includes a reflection laser returned from the reflection of the stray light and the emergent laser. After receiving the stray light, the receiver excites a certain number of single photon units and outputs photocurrent signals, i.e., leading signals. A true reflection laser returned from a target object at a close distance reaches the receiver faster. The photocurrent signals (reflection signals) of the true reflection laser are superimposed on the leading signals and cannot be identified, resulting in detection failure. In practice, the higher the power of the emergent light, the greater the energy of the stray light, and the longer the extinction time of the leading signals. The stray light directly leads to early saturation of the receiver, which is unable to respond to the reflection laser detected at the close distance, thus creating a near-field blind region in the LiDAR. The primary emergent and secondary emergent lasers have different emission powers, and correspond to different ranging scopes and near-field blind regions. In the same detection cycle, the detection result of the primary emergent laser and the detection result of the secondary emergent laser are spliced together and fused to obtain point cloud data for the whole ranging scope. For example, the secondary emission detection cycle detects 0-20 m near-field regions to obtain a secondary emission detection result. If the primary emergent laser adopts a long-range operation mode, a primary emission detection cycle detects 15-200 m far-range regions to obtain a primary emission detection result. Two sets of the detection results are spliced together and fused to obtain point cloud data covering 0 to 200 m, thus eliminating a near-field blind region of laser detection.

Specifically, controlling the emission of the secondary emergent lasers of the plurality of channels at the interval of the first preset time can be as follows: at a first moment, controlling each of the plurality of channels to start secondary emission energy charging; after the secondary emission energy charging, starting secondary emission energy transferring of each of the channels; after the secondary emission energy transferring of each of the channels, controlling each of the channels sequentially to start secondary emission energy enabling. The channel emits a secondary emergent laser. An interval between the secondary emission energy enabling of adjacent channels is the first preset time.

It should be noted that a driving method of the LiDAR can be a constant-voltage source direct drive. The advantage of this driving solution is that it directly drives the emission of laser beam, and is capable of quickly responding and adjusting the power of the emergent light, but the disadvantage is that a constant-voltage source requires higher power and therefore costs and power consumption are larger. When the LiDAR adopts a constant-voltage source direct-drive laser device, controlling the emission of the secondary emergent lasers of the plurality of channels by the interval of the first preset time can be as follows: at the moment of the emission of the secondary emergent laser of each of the channels, control instructions are sent to a drive circuit. After receiving the control instructions, the drive circuit turns on a constant-voltage source so that the laser device emits the secondary emergent laser. Specifically, at the moment of T1, a drive instruction is sent to a drive circuit of CH1 to turn on the constant-voltage source. The laser device emits a secondary emergent laser. After an interval of the first preset time, a drive instruction is sent to a drive circuit of CH2 to turn on the constant-voltage source at the moment of T2, the laser device emits a secondary emergent laser; and so on until a laser device of CH5 emits a secondary emergent laser at the moment of T5. The plurality of channels can share a drive circuit, or each of the channels can be provided with a corresponding drive circuit.

Another drive solution for the LiDAR is to adopt energy charging, energy transferring and energy enabling. An energy charging phase includes charging one energy storage element by a power source, storing electrical energy into the energy storage element. An energy transferring phase includes transferring the electrical energy stored on the energy storage element to an energy transferring element. The energy enabling phase includes releasing the electrical energy stored on the energy transferring element to drive the laser device to emit a laser beam after the transfer of the electrical energy is completed. Because both the energy charging and the energy transferring phases take up a certain amount of time, the energy charging, energy transferring and energy enabling of the drive circuit have strict timing requirements to ensure the frame rate of laser point cloud data, as explained below:
(1) The energy charging and the energy transferring are continuous in timing, i.e., after the energy charging, it enters the phase of energy transferring immediately. Specifically, the drive circuit receives the start instructions of energy charging to start charging energy, and then receives the ending instructions to end the energy charging while the energy transferring starts;
(2) After the energy transferring is completed, the energy enabling can begin. Specifically, when energy enabling signals are received, the energy enabling begins;
(3) All the electrical energy stored on the energy transfer element is released at one time during the energy enabling. One energy transferring phase corresponds to one energy enabling phase;
(4) During the energy charging process of the power source charging the energy storage element, the energy enabling can also be conducted.

The above first moment can be the moment after the end of the maximum encoding energy enabling of the primary emergent laser in the previous operation cycle. The detection cycle includes the secondary emission detection cycle and the primary emission detection cycle. When the primary emergent laser adopts the long-range mode of the operation, modulation is conducted with coding, i.e., random time is added before the primary emergent laser starts the energy charging. The maximum encoding is the duration of the maximum random time set aside. After the maximum encoding energy enabling of the primary emergent laser that the first moment is arranged on the previous operation cycle, and after the energy enabling of the previous operation cycle of all the channels, the secondary emission energy charging and the secondary emission energy transferring of all the channels of the current cycle then start. All the channels have the same moment of the secondary emission energy charging and the secondary emission energy transferring, thereby simplifying a control logic. Specifically, the first moment can be the moment after a period of the preset time when the maximum encoding enabling energy of the primary emergent laser of the previous operation cycle ends. This preset time can be set according to practical needs, for example, 6 ns-13 ns. The longer the charging time, the more electrical energy stored on the energy storage element, and the greater the power of the emergent light. When the emission power of the secondary emergent laser is determined, the charging energy time of the secondary emergent laser is also determined. The duration for transferring energy should exceed a preset lower time limit to ensure that all the electrical energy stored on the energy storage element can be transferred to the energy transferring element. Regarding the multichannel LiDAR, the frame rate of the system determines the limited duration of the detection cycle, and the duration of the analysis region (including the primary emission analysis region and the secondary emission analysis region) of each of the channels is also related to the ranging capability of the system and thus the duration of the detection cycle is fixed. Therefore, if the secondary emission analysis regions of different channels overlap in time, a crosstalk between optical paths of each of the channels is caused, i.e., each of the channels can receive the reflection laser that does not correspond to the channel. Therefore, the emission of the secondary emergent lasers of the plurality of channels of the multichannel LiDAR is controlled in a time-sharing manner during the operation cycle of the multichannel LiDAR, so that the secondary emergent lasers of the plurality of channels are emitted sequentially to avoid the crosstalk.

Step S202: emitting the primary emergent laser at the preset reference moment of the channel or encoding and modulating the emission of the primary emergent laser according to the detection result of the secondary emergent lasers of the plurality of channels.

As can be seen from the preceding, the detection cycle of each of the channels includes the secondary emission detection cycle and the primary emission detection cycle. Based on the detection result of the secondary emergent laser, the operation mode of the primary emergent laser is determined. The operation mode of the primary emergent laser includes a near-range operation mode and a long-range operation mode. The two operation modes have different emission power and the different duration of the corresponding analysis region. Therefore, different emission timing controls are adopted so that the plurality of channels complete one detection cycle within the operation cycle of the LiDAR.

As an embodiment of the present application, the steps of emitting the primary emergent laser at the preset reference moment of the channel or encoding and modulating the emission of the primary emergent laser according to the detection result of the secondary emergent lasers of the plurality of channels can be as follows: determining the operation mode of a primary emergent laser of a channel according to the detection result of a corresponding secondary emergent laser, obtaining the operation modes of the primary emergent lasers of all the channels; if the primary emergent laser of the channel adopts the near-range mode of the operation, the primary emergent laser is emitted at the preset reference moment of the channel; if the primary emergent laser of the channel adopts the long-range mode of the operation, the emission of the primary emergent laser is encoded and modulated.

Regarding the steps of determining the operation mode of the primary emergent laser of the channel according to the detection result of the corresponding secondary emergent laser, obtaining the operation modes of the primary emergent lasers of all the channels, it should be noted that:
First, the detection result of the secondary emergent laser of a certain channel determines the operation mode of the primary emergent laser of the corresponding channel only. Different operation modes can be adopted for the primary emergent lasers of the different channels during the same operation cycle. For example, during the current operation cycle, the primary emergent lasers of CH1, CH2 and CH5 adopt the long-range mode of the operation while primary emergent lasers of CH3 and CH4 adopt the near-range mode of the operation.

There are three possibilities of the operation modes of the primary emergent lasers of all the channels obtained from the LiDAR: 1) the primary emergent lasers of all the channels adopt the long-range mode of the operation to encode and modulate the emission of the primary emergent lasers of all the channels; 2) the primary emergent lasers of all the channels adopt the near-range mode of the operation. All the channels emit the primary emergent lasers at the preset reference moments; 3) the primary emergent lasers of a part of the channels adopt the long-range mode of the operation to encode and modulate the emission of the primary emergent lasers of that part of channels, while the primary emergent laser of the remaining channel adopts the near-range mode of the operation. Those remaining channels emit the primary emergent lasers at the preset reference moment.

Second, when adopting a high-voltage constant-voltage source, the drive circuit of the laser device of the LiDAR can quickly respond and adjust the emission power of the laser device. At this point, according to the detection result of the secondary emergent laser in the current detection cycle, the operation mode of the primary emergent laser of the channel corresponding to the current detection cycle can be determined. According to the detection result of the secondary emergent laser in the current detection cycle, the operation mode of the primary emergent laser is determined. Corresponding drive instructions are sent to the drive circuit. The drive circuit can quickly respond and turn on the constant voltage source to directly drive the laser device to emit the primary emergent laser with corresponding power.

However, to control input power, the LiDAR usually adopts drive circuits of the energy charging, energy transferring, and energy enabling to drive the laser device. When driving the laser device, the power source first charges the charging module and stores the electrical energy on an inductor. After charging is completed, the electrical energy stored on the inductor is transferred to an energy storage capacitor according to energy transferring instructions. Finally, the electrical energy stored on the energy storage capacitor is released to the laser device according to enabling instructions, and then the laser device emits the emergent light. Therefore, the above drive process takes some time. At the same time, after receiving an echo laser of the secondary emergent laser, the receiver outputs echo signals. A back-end output circuit amplifies, shapes, and samples the echo signals, which also takes up some time. The detection result can not be immediately output. Therefore, to ensure a point frequency of the LiDAR, this solution adopts the detection result of the secondary emergent laser of the current detection cycle to determine the operation mode of a primary emergent laser in the next detection cycle. If the drive speed of the laser device and the processing speed of the back-end output circuit can be increased, the above detection result of the secondary emergent laser of the current detection cycle can be adopted to determine the operation mode of the primary emergent laser of the channel corresponding to the current detection cycle.

Third, the operation modes of primary emergent lasers include the near-range mode of the operation and the long-range mode of the operation. The emission power of the primary emergent laser in the near-range mode of the operation is small and less than that of the secondary emergent laser. The emission power of the primary emergent laser in the long-range mode of the operation is large and much greater than that of the secondary emergent laser. When the above drive circuits of the energy charging, energy transferring and energy enabling are adopted, the charging energy time of the primary emergent laser in the near-range mode of the operation is much less than that of the primary emergent laser in the long-range mode of the operation.

Further, according to the detection result of the secondary emergent laser of the above embodiments, determining the mode of the operation of the primary emergent laser of the corresponding channel is specifically as follows: if the detection result of the secondary emergent laser of the channel is that no echo laser is received or the moment of receiving a reflection laser is greater than a third moment, it is determined that the primary emergent laser of the channel adopts the long-range mode of the operation; if the detection result of the secondary emergent laser of the channel is that the moment of receiving the reflection lasers is less than or equal to the third moment, it is determined that the primary emergent laser of the channel adopts the near-range mode of the operation. In the above embodiment, the third moment is the extinction moment of the leading signals when the primary emission detection cycle adopts the long-range mode.

The detection result of the secondary emergent lasers of the plurality of channels can be achieved by steps S301 to S303.

Step S301: determining whether to identify reflection signals in the echo signals, where the reflection signal is a laser of the secondary emergent laser that is emitted to a detection region and is reflected back.

If there is a target object within the farthest detection distance of the secondary emergent laser, the receiver of the LiDAR receives the echo laser, the echo laser includes a reflection laser and a stray light returned after the secondary emergent laser is reflected by the target object, and outputs the corresponding reflection signals and leading signals. Therefore, the echo signals output from the secondary emission cycle includes the reflection signals and the leading signals.

Step S302: if the reflection signals are not identified, the detection result is determined according to the waveform feature of the leading signals of the secondary emergent laser.

If the reflection signals are not identified, there are two situations: first, the receiver receives the reflection laser of the secondary emergent laser, but the reflection signals and the leading signals that are both output by the receiver are overlapped. The back-end output circuit can not distinguish the reflection signals of the secondary emergent laser. Second, the target object is beyond a ranging scope. The receiver really does not receive the reflection laser of the secondary emergent laser. The receiver does not output the reflection signals but only the leading signals.

Specifically, as an embodiment of the present application, according to the waveform feature of the leading signals of the secondary emergent laser, determining the detection result can be as follows: obtaining a feature difference between a waveform feature of the leading signals of the secondary emergent laser and a preset waveform feature; comparing the feature difference with a preset threshold; if an absolute value of the feature difference exceeds the preset threshold, it is determined that the moment of receiving the reflection laser of the secondary emergent laser is earlier than a fourth moment; that is, the detection result of the secondary emergent laser is that the moment of receiving the echo laser is less than the third moment. If the absolute value of the feature difference is less than or equal to the preset threshold, the detection result of the secondary emergent laser is determined that no reflection laser of the secondary emergent laser is received.

In the above embodiment, the preset waveform feature can be obtained by calibrating the leading signals of the LiDAR. By comparing the received leading signals with the waveform feature of the leading signals obtained by advance calibration, it is possible to know whether there are overlapped reflection signals.

Therefore, if a feature difference between the waveform feature of the leading signals output from the receiver and the preset waveform feature exceeds the preset threshold after the secondary emergent laser is emitted in the current detection cycle, it indicates that indistinguishable reflection signals are overlapped in the leading signals, resulting in a significant change in the waveform feature of the leading signals. It indicates that the receiver receives the reflection laser, and the moment of receiving the reflection laser is earlier than the fourth moment. When the receiving moment of the reflection laser is earlier than the fourth moment, the reflection signals and the leading signals are too close with each other and overlapped together to be indistinguishable. If the feature difference between the waveform feature of the leading signals output from the receiver and the preset waveform feature does not exceed the preset threshold value, it indicates that the received echo signals are the leading signals. There is no reflection signals. Therefore, the reflection laser is not received.

The waveform feature can be a pulse width. Specifically, the leading signals have a pulse width greater than a preset threshold. The waveform feature can also be an amplitude. Specifically, the amplitude of the leading signals is greater than a preset threshold. The waveform feature can also be a waveform area. Specifically, the waveform area of the leading signals is larger than a preset threshold. The larger waveform area may be caused by changes in the amplitude and/or the pulse width.

Step S303: if the reflection signals are identified, the detection result is determined according to the moment of receiving the reflection signals.

If the back-end output circuit can identify the reflection signals, it indicates that two waveforms can be sampled in the secondary emission analysis region, and are the leading signals and the reflection signals of the secondary emergent laser, respectively. The moment of receiving the reflection laser is later than the fourth moment. The moment of receiving the reflection laser can be obtained by solving the sampled moment of the reflection signal. According to the sampling time of the reflection signals, the moment of receiving the reflection laser is obtained, thus determining the detection result of the secondary emergent laser.

When the moment of receiving the reflection laser is less than or equal to the third moment, the moment of receiving the reflection laser of the secondary emergent laser is located between the fourth moment and the third moment. The reflection signals are not overlapped with the leading signals of the secondary emergent laser, but still are overlapped with the leading signals of the primary emergent laser in the long-range mode. The target object is located within the near-field blind region of the primary emission detection cycle of the long-range mode, e.g., the near-field blind region of the primary emission detection cycle of the long-range mode is 0 to 15 m. When the moment of receiving the reflection laser is greater than the third moment, the moment of receiving the reflection laser of the secondary emergent laser is greater than the third moment. The reflection signal is not overlapped with the leading signals of the secondary emergent laser or is not overlapped with the leading signals of the primary emergent laser of the long-range mode. As a result, the target object is located in the far-field region, e.g. the target region is located in a far-field region in a range of 15 m to 200 m.

When the detection result of the secondary emergent laser is that the reflection laser is not received or the moment of receiving the reflection laser is greater than the third moment, it is determined that the primary emergent laser adopts the long-range mode of the operation to obtain the strongest detection capability. The target object or an object with low reflectivity at a longer distance is further determined. The emission power of the primary emergent laser in the long-range mode of the operation is much higher than the emission power of the secondary emergent laser. Generally speaking, the emission power of the primary emergent laser in the long-range mode is the maximum emission power of the LiDAR, which is usually a full power. In addition, if the detection result of the secondary emergent laser shows that there is no reflection laser in the near-field region, such as a range of 2 m to 20m, the possibility that a person is within the range can be excluded. The primary emergent laser adopts the long-range mode of the operation, which can ensure the ranging capability of the LiDAR (for example, the farthest detection distance of the LiDAR needs to reach 200 m), and also ensure the safety of human eyes, thereby avoiding emitting a high power emergent laser when a person is in the near-field region.

When the moment of receiving the reflection laser is less than or equal to the third moment, the target object is located in the near-field blind region of the primary emergent laser in the long-range mode of the operation. The primary emergent laser is determined to adopt the near-range mode of the operation. To be able to accurately detect the target object at a closer distance, the emission power of the primary emergent laser is less than the emission power of the secondary emergent laser. The stray light is further reduced. A small amount of the stray light does not excite the receiver. The receiver does not output the leading signals, thus avoiding the impact of the leading signals on the near-field detection, and being able to accurately detect the target object in a range of 0 to 2m. Therefore, the primary emergent laser adopts the near-range mode. The emission power of the primary emergent laser in the near-range mode is less than that of the secondary emergent laser. For example, the detection range of the primary emergent laser in the near-range mode is 0 to 10m.

The primary emergent laser adopts the channel with the long-range mode of the operation to encode and modulate the emission of the primary emergent laser for the channel. Because the primary emergent laser of the long-range mode of the operation has the highest emission power, a corresponding far-primary analysis region is the longest. If the channels are still adopted to emit primary emergent lasers sequentially and an emission interval is larger than the far-primary analysis region so as to avoid the crosstalk between the channels, occupied time certainly exceeds the duration of the detection cycle, thus pulling down the frame rate of the system. Therefore, an encoding and modulating method is adopted to control the emission of the primary emergent lasers. Specifically, a second moment is obtained. The second moment is the beginning of an encoding region. The duration of the encoding region is random. After the encoding region, the channel is controlled to start far-primary energy charging. After the far-primary energy charging, far-primary energy transferring of the channel starts. After the far-primary energy transferring of the channel, the channel is controlled to start the far-primary energy enabling. The channel emits the primary emergent laser. The second moment can be initial signals of the galvanometer of the multichannel LiDAR, for example, the galvanometer outputs one clock signal by rotating every fixed angle. The second moment can also be generated by a clock module of the multichannel LiDAR, for example, the clock signals are output every fixed time interval. The second moment is a baseline. A period of delay is added before the main laser emission is emitted. The delay is the encoding region. The duration of the encoding region is a delay amount. Because the LiDAR solves a distance by calculating the time of receiving the reflection laser and the time of transmitting the emergent laser. The amount of delay can be eliminated by subtracting the receiving time and the transmitting time to obtain an accurate detection distance. The same object is basically detected by adjacent detection cycles. The same detection distance is obtained. The delay amount of interference light from the crosstalk of the other channel is different from the delay amount of the channel. The calculated detection distance is significantly changed, which in turn can identify the interference light, thereby achieving the effect of anti-interference. The encoding region is set to the maximum duration, which can be 200 ns for example. The duration of the encoding region can be any value within 0-200ns.

The near-range mode of the operation has the lowest emission power of the primary emergent laser. The corresponding near-primary analysis region is the shortest. The duration of the near-primary-analysis region is a fourth preset time. The fourth preset time is less than the second preset time. As the primary emergent laser adopts the channel (the far-primary channel) in the long-range operation mode, the time of the far-primary energy charging is very long. As the primary emergent laser adopts the channel (the near-primary channel) in the near-mode of the operation, the near-primary energy charging and the near-primary analysis region occupy a very short time. When the near-primary channel completes one transceiver detection, the far-primary channels are still in the far-primary energy charging. Therefore, there is no crosstalk between the primary emission channel and the near-primary channel.

The primary emergent laser adopts the channel in the near-range mode of the operation and emits the primary emergent laser at the preset reference moment of the channel. Specifically, the second moment is obtained. The channel is controlled at the second moment to start the near-primary energy charging. The near-primary energy transferring of the channel starts after the near-primary energy charging. The near-primary energy enabling starts at the preset reference moment of the channel after the near-primary energy transferring of the channel. The channel emits the primary emergent laser. The near-primary analysis region is very short. The primary emergent lasers of all the near-primary channels are controlled to be emitted. An emission time interval is greater than the near-primary analysis region to avoid the crosstalk between the plurality of near-primary channels during the primary emission detection cycle.

However, regarding a channel, the operation mode of the primary emergent laser is continuously adjusted and changed according to the detection result of the secondary emergent laser. The primary emergent laser for the current detection cycle adopts the near-range operation mode. The primary emergent laser of the next detection cycle may be changed to the long-range mode of the operation. If each operation cycle of the multichannel LiDAR needs to identify all the near-primary channels and controls primary emergent lasers of these near-primary channels to be emitted sequentially at a certain time interval, the control difficulty is greatly increased. Therefore, each of the channels is preset with one reference moment. The time interval between the reference moments of the adjacent channels is a third preset time. The third preset time is greater than or equal to the fourth preset time. In this way, regarding a channel, the primary emergent laser of any detection cycle adopts the near-range mode of the operation and the primary emergent laser is emitted at the preset reference moment, so that the near-primary analysis region is not overlapped with other channel to cause crosstalk. However, regarding the multichannel LiDAR, the near-primary channel only needs to control the emission of the primary emergent laser at the preset reference moment, which is convenient to simplify the control of the system.

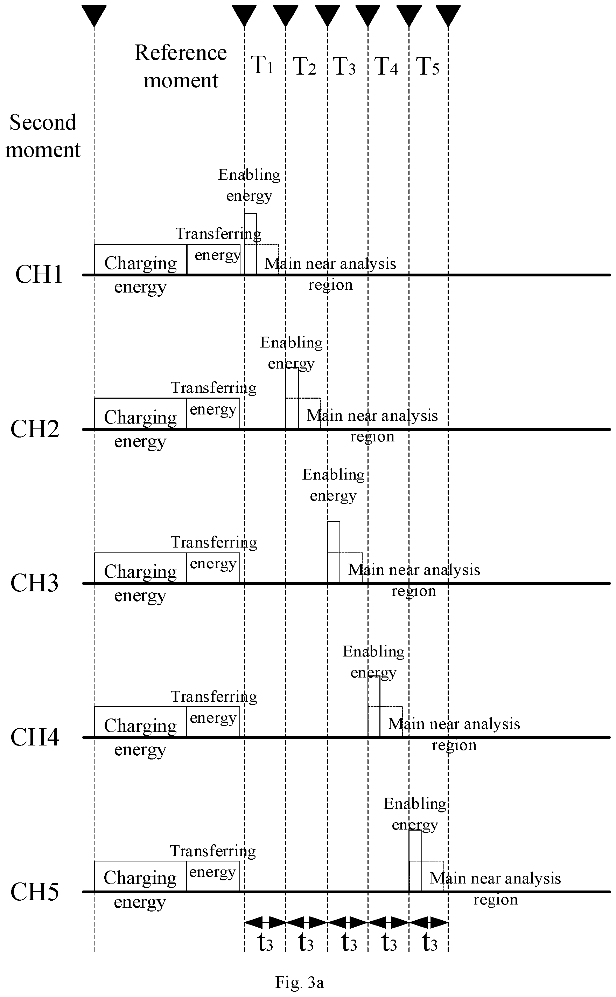

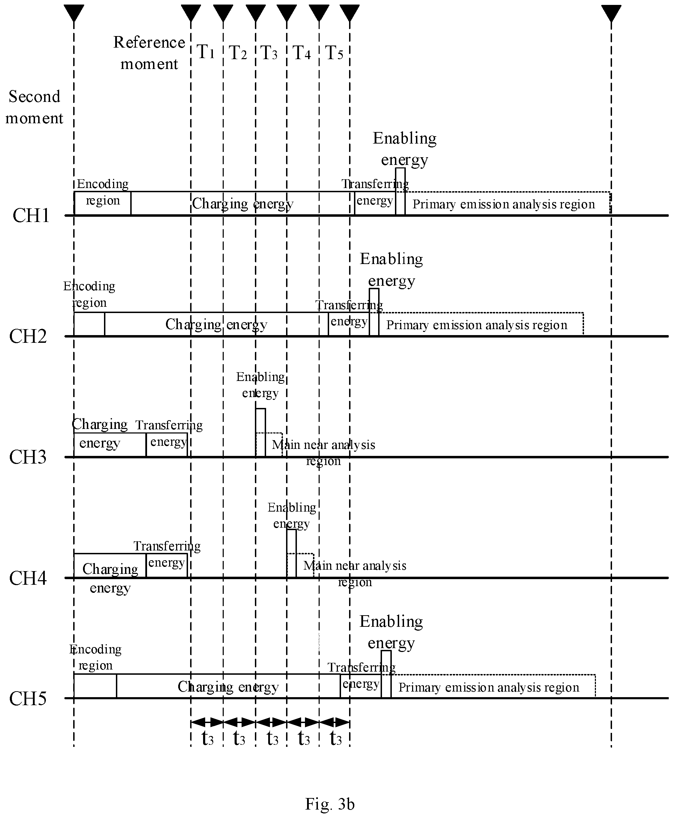

Taking as an example the above multichannel LiDAR with a total of the five channels (i.e., CH1-CH5) of CH1, CH2, CH3, CH4 and CH5, the emission control of the primary emergent laser in different operation modes is further described by combining Fig. 3a with Fig. 3b.

As shown in Fig. 3a, CH1, CH2, CH3, CH4 and CH5 are all preset with the reference moments, which are a first reference moment (T1), a second reference moment (T2), a third reference moment (T3), a fourth reference moment (T4), and a fifth reference moment (T5), respectively. A time interval between the first reference moment and the second reference moment is the third preset time (indicated by t3 in the figure). A time interval between the second reference moment and the third reference moment is also the third preset time, and so on. A time interval between the fourth reference moment and the fifth reference moment is also the third preset time. If the primary emergent lasers of CH1-CH5 all adopt the near-range mode of the operation, the channels emit primary emergent lasers sequentially. The emission interval is greater than the duration of the near-primary analysis region. No crosstalk occurs during the five primary emission detection cycles.

Also, the total time obtained by adding the time of the near-primary energy charging, the near-primary energy transferring, the near-primary energy enabling of the five channels and the third preset time occupied by the five channels is also less than the time of the far-primary energy charging. Therefore, there is no overlapped region between the near-primary analysis region and the far-primary analysis region. No crosstalk is generated for the primary emission detection cycles of the near-primary channel and the far-primary channel.

The primary emergent lasers of the channels CH1, CH2 and CH5 of the current operation cycle of the multichannel LiDAR adopt the long-range mode of the operation, while the primary emergent lasers of the channels CH3 and CH4 adopt the near-range mode of the operation. These two are described as examples.

As shown in Fig. 3b, when the primary emergent lasers of the channels CH1, CH2 and CH5 adopt the long-range mode of the operation, all the three channels start to encode at the second moment of the respective detection cycles. After a delay in the encoding region, the far-primary energy charging, the far-primary energy transferring and the far-primary energy enabling (briefly expressed in the figure using the charging energy, the transferring energy, and the enabling energy, respectively) emit the primary emergent laser. The duration of the encoding region for each of the three channels is random. The time duration of the primary emission energy charging and the primary emission energy transferring is the same for all the three channels. The moment of the far-primary energy enabling is different because of the different duration of the encoding region, i.e. the emission moment of the primary emergent laser is slightly earlier or later for the three channels. When the primary emergent lasers of the channels CH3 and CH4 adopt the near-range mode of the operation, both channels start the near-primary energy charging and the near-primary energy transferring at the second moment of the respective detection cycles. After the energy transferring is completed, the channel CH3 conducts the near-primary energy enabling at the third reference moment, and emits the primary emergent laser. Channel CH4 conducts the near-primary energy enabling at the fourth reference moment, and emits the primary emergent laser.

If the primary emergent lasers of the channels CH1 and CH4 in the next operation cycle of the multichannel LiDAR adopt the long-range mode of the operation, while the primary emergent lasers of the channels CH2, CH3 and CH5 adopt the near-range mode of the operation The channels CH1 and CH4 start to encode at the second moment of the respective detection cycles. After a delay in the encoding region, the far-primary energy charging, the far-primary energy transferring and the far-primary energy enabling start to emit the main transmitting laser. The duration of the encoding region for the two channels is different. The channels CH2, CH3, and CH5 start the near-primary energy charging and the near-primary energy transferring at the second moment of the respective detection cycles. The channel CH2 conducts the near-primary energy enabling at the second reference moment and emits the primary emergent laser. The channel CH3 conducts the near-primary energy enabling at the third reference moment and emits the primary emergent laser. The channel CH5 conducts the near-primary energy enabling at the fifth reference moment and emits the primary emergent laser.

From the method for controlling the emission of the multichannel laser exemplified in Fig. 2 above, it is known that the emission of the secondary emergent lasers of the plurality of channels of the multichannel LiDAR is controlled in the time-sharing manner during the operation cycle of the multichannel LiDAR. The primary emergent laser is emitted at the preset reference moment of the channel or the emission of the primary emergent laser is encoded and modulated according to the detection result of the secondary emergent laser of the plurality of channels. The detection cycle of each of the channels of the LiDAR includes the secondary emission cycle and the primary emission cycle. The LiDAR of the plurality of channels includes the plurality of secondary emission and primary emission cycles. The duration of the operation cycle of the LiDAR is limited by the frame rate of the system. The emission of the secondary emergent lasers of the plurality of channels is controlled with a time-sharing manner. The primary emergent laser is emitted at the preset reference moment of the channel or the emission of the primary emergent laser is encoded and modulated. Therefore, the secondary emission and primary emission cycles of the plurality of channels can be spaced apart in time, or a reflection laser of this channel can be identified by encoding and decoding, which can prevent a crosstalk between the channels during the operation of the multichannel laser without increasing the cost.

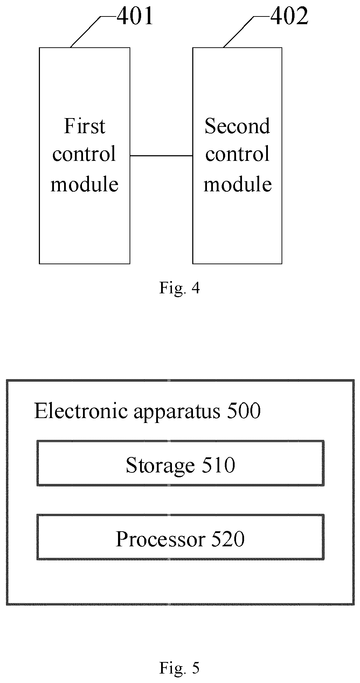

Fig. 4 is a schematic structural diagram of a control device for multichannel laser emission provided in an embodiment of the present application. For ease of description, only those portions that relate to embodiments of the present application are shown. The device for controlling the emission of the multichannel laser exemplified in Fig. 4 mainly comprises a first control module 401 and a second control module 402.

The first control module 401 is configured to control emission of secondary emergent lasers of plurality of channels of the multichannel LiDAR in a time-sharing manner during the operation cycle of the multichannel LiDAR.

The second control module 402 is configured to emit a primary emergent laser at a preset reference moment of the channel or encode and modulate the emission of the primary emergent laser according to the detection result of the secondary emergent lasers of the plurality of channels.

For the device in this embodiment, how the modules specifically implement the operations has been described in the embodiments of the method in detail, and no further elaboration is provided herein.

As can be seen from the device for controlling the emission of the multichannel laser exemplified in Fig. 4 above, the emission of the secondary emergent lasers of the plurality of channels of the multichannel LiDAR is controlled in a time-sharing manner during the operation cycle of the multichannel LiDAR. The primary emergent laser is emitted at the preset reference moment of the channel or the emission of the primary emergent laser is encoded and modulated according to the detection result of the secondary emergent lasers of the plurality of channels. The detection cycle of each of the channels of the LiDAR includes a secondary emission cycle and a primary emission cycle. The LiDAR of the plurality of channels includes the plurality of secondary emission and primary emission cycles. The duration of the operation cycle of the LiDAR is limited by the frame rate of a system. The emission of the secondary emergent lasers of the plurality of channels is controlled with a time-sharing manner. The primary emergent laser is emitted at the preset reference moment of the channel or the emission of the primary emergent laser is encoded and modulated. Therefore, the secondary emission and primary emission cycles of the plurality of channels can be spaced apart in time, or a reflection laser of this channel can be identified by encoding and decoding, which can prevent a crosstalk between the channels during the operation of the multichannel laser without increasing the cost.

Fig. 5 is a schematic structural diagram of an electronic apparatus shown in an embodiment of the present application. The electronic apparatus is a multichannel LiDAR device.

Referring to Fig. 5, the electronic apparatus 500 includes a storage 510 and a processor 520.

The processor 520 can be a Central Processing Unit (CPU) or other general-purpose processor, Digital Signal Processor (DSP), Application Specific Integrated Circuit (ASIC), Field-Programmable Gate Array (FPGA), or other programmable logic device, a discrete gate or transistor logic device, a discrete hardware component, etc. The general-purpose processor can be a microprocessor, or the processor can be any conventional processor or the like.

The storage 510 can include various types of storage units, such as a system memory, a read-only memory (ROM), and a permanent storage device. The ROM can store static data or instructions needed by the processor 520 or other modules of a computer. The permanent storage device can be a readable/writable storage device. The permanent storage device can be a nonvolatile storage that does not lose stored instructions and data even if the computer is powered off. In some embodiments, the permanent storage device uses a large-capacity storage device (for example, a magnetic or optical disk, or a flash memory). In some other implementations, the permanent storage device can be a removable storage apparatus (e.g., a floppy disk, a CD-ROM drive). A system memory can be a readable/writable storage apparatus or a volatile readable/writable storage apparatus, for example, a dynamic random access memory. The system memory can store some or all of instructions and data required by the processor during running. In addition, the storage 510 can include any combination of computer-readable storage media, including various types of semiconductor memory chips (e.g., DRAM, SRAM, SDRAM, the flash memory, a programmable read-only memory). A disk and/or the optical disk can also be employed. In some embodiments, the storage 510 can include a readable/writable removable storage apparatus such as a compact disc (CDs), a read-only digital versatile disk (e.g., DVD-ROM, a dual-layer DVD-ROM), a read-only Blue-ray disk, an ultra-dense disk, a flash memory card (e.g., an SD card, a min SD card, a micro-SD card, etc.), a magnetic floppy disk, etc. The computer-readable storage medium does not include a carrier wave or a transient electronic signal transmitted by wireless or wire.

Executable codes are stored on the storage 510. When the executable codes are processed by the processor 520, the executable codes cause the processor 520 to execute the methods described above.

In an aspect not claimed, the method according to the present application can also be implemented as a computer program or a computer program product, where the computer program or the computer program product includes computer program code instructions for executing some or all of the steps in the above method in the present application.

Alternatively, the present application is implemented as a computer-readable storage medium (or a non-transitory machine-readable storage medium or a machine-readable storage medium) having executable codes stored thereon (or the computer program or computer instruction codes). When executed by the processor (a server, or the like) of the electronic apparatus, the executable codes (or the computer program or the computer instruction codes) cause the processor to execute the steps in the above method in the present application.

## Claims

1. A control method for multichannel laser emission, comprising:
controlling sequentially emission of secondary emergent lasers of a plurality of channels of a multichannel LiDAR device in a time-sharing manner during an operation cycle of the multichannel LiDAR device (S201); and
according to a detection result of the secondary emergent lasers of the plurality of channels, emitting a primary emergent laser at a preset reference moment of the channel or encoding and modulating emission of the primary emergent laser (S202),
**characterized in that**,
the step of emitting the primary emergent laser at the preset reference moment of the channel or encoding and modulating the emission of the primary emergent laser comprises:
determining an operation mode of the primary emergent laser of a channel according to the detection result of the corresponding secondary emergent laser, and obtaining the operation modes of the primary emergent lasers of all the channels;
when the primary emergent laser of the channel adopts a near-range operation mode, emitting the primary emergent laser at the preset reference moment of the channel; and
when the primary emergent laser of the channel adopts a long-range operation mode, encoding and modulating the emission of the primary emergent laser, and
the step of encoding and modulating the emission of the primary emergent laser comprises:
obtaining a second moment, which is the beginning of an encoding region, the duration of the encoding region being of a random length;
controlling the channel to start far-primary energy charging after the encoding region;
starting far-primary energy transferring of the channel after the far-primary energy charging; and
controlling the channel to start far-primary energy enabling after the far-primary energy transferring of the channel, and emitting, by the channel, the primary emergent laser.

2. The control method according to claim 1, wherein the step of controlling the emission of the secondary emergent lasers of the plurality of channels of the multichannel LiDAR device in the time-sharing manner comprises:
controlling the secondary emergent lasers of the plurality of channels to be emitted at an interval of a first preset time.

3. The control method according to claim 2, wherein the step of controlling the secondary emergent lasers of the plurality of channels to be emitted at the interval of the first preset time comprises:
at a first moment, controlling each of the channels to start secondary emission energy charging;
starting secondary emission energy transferring of each of the channels after the secondary emission energy charging;
after the secondary emission energy transferring of each of the channels, controlling each of the channels sequentially to start secondary emission energy enabling, and emitting, by the channel, the secondary emergent laser, an interval between the secondary emission energy enabling of adjacent ones of the channels being the first preset time.

4. The control method according to claim 3, wherein:
a duration of a secondary emission analysis region of each of the channels is a second preset time, and the first preset time is greater than or equal to the second preset time.

5. The control method according to claim 1, wherein the steps of determining the operation mode of the primary emergent laser of the channel according to the corresponding detection result of the secondary emergent laser and obtaining the operation modes of the primary emergent lasers of all the channels comprise:
when the detection result of the secondary emergent laser of the channel is that no reflection laser is received or a moment of receiving a reflection laser is greater than a third moment, determining that the primary emergent laser of the corresponding channel adopts the long-range operation mode;
when the detection result of the secondary emergent laser of the channel is that a moment of receiving the reflection laser is less than or equal to the third moment, determining that the primary emergent laser of the corresponding channel adopts the near-range operation mode.

6. The control method according to claim 1, wherein the step of emitting the primary emergent laser at the preset reference moment of the channel comprises:
obtaining a second moment, and controlling the channel to start near-primary energy charging of the channel at the second moment;
starting near-primary energy transferring of the channel after the near-primary energy charging;
starting near-primary energy enabling at a preset reference moment of the channel after the near-primary energy transferring of the channel, and emitting, by the channel, the primary emergent laser,
wherein each of the channels is preset with a reference moment, and an interval between the reference moments corresponding to adjacent ones of the channels is a third preset time.

7. The control method according to claim 6, wherein:
a duration of a primary emission analysis region of the near-range operation mode is a fourth preset time, and the third preset time is greater than or equal to the fourth preset time.

8. A control device for multichannel laser emission, comprising:
a first control module, configured to control sequentially emission of secondary emergent lasers of a plurality of channels of a multichannel LiDAR device in a time-sharing manner during an operation cycle of the multichannel LiDAR device; and
a second control module, configured to, according to a detection result of the secondary emergent lasers of the plurality of channels, emit a primary emergent laser at a preset reference moment of the channel or encode and modulate emission of the primary emergent laser,
**characterized in that**,
the step of emitting the primary emergent laser at the preset reference moment of the channel or encoding and modulating the emission of the primary emergent laser comprises:
determining an operation mode of the primary emergent laser of a channel according to the detection result of the corresponding secondary emergent laser, and obtaining the operation modes of the primary emergent lasers of all the channels;
when the primary emergent laser of the channel adopts a near-range operation mode, emitting the primary emergent laser at the preset reference moment of the channel; and
when the primary emergent laser of the channel adopts a long-range operation mode, encoding and modulating the emission of the primary emergent laser, and
the step of encoding and modulating the emission of the primary emergent laser comprises:
obtaining a second moment, which is the beginning of an encoding region, the duration of the encoding region being of a random length;
controlling the channel to start far-primary energy charging after the encoding region;
starting far-primary energy transferring of the channel after the far-primary energy charging; and
controlling the channel to start far-primary energy enabling after the far-primary energy transferring of the channel, and emitting, by the channel, the primary emergent laser.

9. A multichannel LiDAR device, comprising:
a processor; and
a storage having executable codes stored thereon, wherein when executed by the processor, the executable codes cause the processor to execute the method according to any one of claims 1 to 7.

10. A computer readable storage medium having executable codes stored thereon, wherein when executed by a processor of a multichannel LiDAR device, the executable codes cause the processor to execute the method according to any one of claims 1 to 7.

## Patentansprüche

1. Steuerverfahren für Mehrkanal-Laseremission, umfassend:
aufeinanderfolgende Steuerung der Emission von sekundären Emergenzlasern einer Vielzahl von Kanälen einer Mehrkanal-LiDAR-Vorrichtung in zeitlich geteilter Weise während eines Betriebszyklus der Mehrkanal-LiDAR-Vorrichtung (S201); und
gemäß einem Detektionsergebnis der sekundären Emergenzlaser der Vielzahl von Kanälen, Emission eines primären Emergenzlasers zu einem voreingestellten Referenzmoment des Kanals oder Codierung und Modulation der Emission des primären Emergenzlasers (S202),
**dadurch gekennzeichnet, dass**
der Schritt der Emission des primären Emergenzlasers zu dem voreingestellten Referenzmoment des Kanals oder der Codierung und Modulation der Emission des primären Emergenzlasers umfasst:
Bestimmung eines Betriebsmodus des primären Emergenzlasers eines Kanals gemäß dem Detektionsergebnis des entsprechenden sekundären Emergenzlasers und Ermittlung der Betriebsmodi der primären Emergenzlaser aller Kanäle;
wenn der primäre Emergenzlaser des Kanals einen Nahbereichsbetriebsmodus annimmt, Emission des primären Emergenzlasers zu dem voreingestellten Referenzmoment des Kanals; und
wenn der primäre Emergenzlaser des Kanals einen Fernbereichsbetriebsmodus annimmt, Codierung und Modulation der Emission des primären Emergenzlasers, und
der Schritt der Codierung und Modulation der Emission des primären Emergenzlasers umfasst: Ermittlung eines zweiten Moments, der den Beginn eines Codierungsbereichs darstellt, wobei die Dauer des Codierungsbereichs eine zufällige Länge aufweist;
Steuerung des Kanals zum Starten der Fern-Primär-Energieaufladung nach dem Codierungsbereich;
Starten der Fern-Primär-Energieübertragung des Kanals nach der Fern-Primär-Energieaufladung; und
Steuerung des Kanals zum Starten der Fern-Primär-Energieaktivierung nach der Fern-Primär-Energieübertragung des Kanals und Emission des primären Emergenzlasers durch den Kanal.

2. Steuerverfahren nach Anspruch 1, wobei der Schritt der Steuerung der Emission der sekundären Emergenzlaser der Vielzahl von Kanälen der Mehrkanal-LiDAR-Vorrichtung in zeitlich geteilter Weise umfasst:
Steuerung der sekundären Emergenzlaser der Vielzahl von Kanälen zur Emission in einem Intervall einer ersten voreingestellten Zeit.

3. Steuerverfahren nach Anspruch 2, wobei der Schritt der Steuerung der sekundären Emergenzlaser der Vielzahl von Kanälen zur Emission im Intervall der ersten voreingestellten Zeit umfasst:
Zu einem ersten Moment, Steuerung jedes Kanals zum Starten der sekundären Emissionsenergieaufladung;
Starten der sekundären Emissionsenergieübertragung jedes Kanals nach der sekundären Emissionsenergieaufladung;
Nach der sekundären Emissionsenergieübertragung jedes Kanals, aufeinanderfolgende Steuerung jedes Kanals zum Starten der sekundären Emissionsenergieaktivierung und Emission des sekundären Emergenzlasers durch den Kanal, wobei ein Intervall zwischen der sekundären Emissionsenergieaktivierung benachbarter Kanäle die erste voreingestellte Zeit ist.

4. Steuerverfahren nach Anspruch 3, wobei:
eine Dauer einer sekundären Emissionsanalysierregion jedes Kanals eine zweite voreingestellte Zeit ist, und die erste voreingestellte Zeit größer oder gleich der zweiten voreingestellten Zeit ist.

5. Steuerverfahren nach Anspruch 1, wobei die Schritte der Bestimmung des Betriebsmodus des primären Emergenzlasers des Kanals gemäß dem entsprechenden Detektionsergebnis des sekundären Emergenzlasers und der Ermittlung der Betriebsmodi der primären Emergenzlaser aller Kanäle umfassen:
Wenn das Detektionsergebnis des sekundären Emergenzlasers des Kanals darin besteht, dass kein Reflexionslaser empfangen wird oder ein Moment des Empfangs eines Reflexionslasers größer als ein dritter Moment ist, Bestimmung, dass der primäre Emergenzlaser des entsprechenden Kanals den Fernbereichsbetriebsmodus annimmt;
Wenn das Detektionsergebnis des sekundären Emergenzlasers des Kanals darin besteht, dass ein Moment des Empfangs des Reflexionslasers kleiner oder gleich dem dritten Moment ist, Bestimmung, dass der primäre Emergenzlaser des entsprechenden Kanals den Nahbereichsbetriebsmodus annimmt.

6. Steuerverfahren nach Anspruch 1, wobei der Schritt der Emission des primären Emergenzlasers zu dem voreingestellten Referenzmoment des Kanals umfasst:
Ermittlung eines zweiten Moments und Steuerung des Kanals zum Starten der Nah-Primär-Energieaufladung des Kanals zum zweiten Moment;
Starten der Nah-Primär-Energieübertragung des Kanals nach der Nah-Primär-Energieaufladung;
Starten der Nah-Primär-Energieaktivierung zu einem voreingestellten Referenzmoment des Kanals nach der Nah-Primär-Energieübertragung des Kanals und Emission des primären Emergenzlasers durch den Kanal,
wobei jedem Kanal ein Referenzmoment voreingestellt ist und ein Intervall zwischen den Referenzmomenten entsprechend benachbarten Kanälen eine dritte voreingestellte Zeit ist.

7. Steuerverfahren nach Anspruch 6, wobei:
eine Dauer einer primären Emissionsanalysierregion des Nahbereichsbetriebsmodus eine vierte voreingestellte Zeit ist, und die dritte voreingestellte Zeit größer oder gleich der vierten voreingestellten Zeit ist.

8. Steuerungsvorrichtung für Mehrkanal-Laseremission, umfassend:
ein erstes Steuermodul, das konfiguriert ist, die Emission von sekundären Emergenzlasern einer Vielzahl von Kanälen einer Mehrkanal-LiDAR-Vorrichtung in zeitlich geteilter Weise während eines Betriebszyklus der Mehrkanal-LiDAR-Vorrichtung aufeinanderfolgend zu steuern; und
ein zweites Steuermodul, das konfiguriert ist, gemäß einem Detektionsergebnis der sekundären Emergenzlaser der Vielzahl von Kanälen einen primären Emergenzlaser zu einem voreingestellten Referenzmoment des Kanals zu emittieren oder die Emission des primären Emergenzlasers zu codieren und zu modulieren,
**dadurch gekennzeichnet, dass**
der Schritt der Emission des primären Emergenzlasers zu dem voreingestellten Referenzmoment des Kanals oder der Codierung und Modulation der Emission des primären Emergenzlasers umfasst:
Bestimmung eines Betriebsmodus des primären Emergenzlasers eines Kanals gemäß dem Detektionsergebnis des entsprechenden sekundären Emergenzlasers und Ermittlung der Betriebsmodi der primären Emergenzlaser aller Kanäle;
wenn der primäre Emergenzlaser des Kanals einen Nahbereichsbetriebsmodus annimmt, Emission des primären Emergenzlasers zu dem voreingestellten Referenzmoment des Kanals; und
wenn der primäre Emergenzlaser des Kanals einen Fernbereichsbetriebsmodus annimmt, Codierung und Modulation der Emission des primären Emergenzlasers, und
der Schritt der Codierung und Modulation der Emission des primären Emergenzlasers umfasst:
Ermittlung eines zweiten Moments, der den Beginn eines Codierungsbereichs darstellt, wobei die Dauer des Codierungsbereichs eine zufällige Länge aufweist;
Steuerung des Kanals zum Starten der Fern-Primär-Energieaufladung nach dem Codierungsbereich;
Starten der Fern-Primär-Energieübertragung des Kanals nach der Fern-Primär-Energieaufladung; und
Steuerung des Kanals zum Starten der Fern-Primär-Energieaktivierung nach der Fern-Primär-Energieübertragung des Kanals und Emission des primären Emergenzlasers durch den Kanal.

9. Mehrkanal-LiDAR-Vorrichtung, umfassend:
einen Prozessor; und
einen Speicher, auf dem ausführbare Codes gespeichert sind, wobei bei Ausführung durch den Prozessor die ausführbaren Codes den Prozessor veranlassen, das Verfahren nach einem beliebigen der Ansprüche 1 bis 7 auszuführen.

10. Computerlesbares Speichermedium, auf dem ausführbare Codes gespeichert sind, wobei bei Ausführung durch einen Prozessor einer Mehrkanal-LiDAR-Vorrichtung die ausführbaren Codes den Prozessor veranlassen, das Verfahren nach einem beliebigen der Ansprüche 1 bis 7 auszuführen.

## Revendications

1. Procédé de commande pour émission laser multicanaux, comprenant les étapes consistant à :
commander séquentiellement l'émission de lasers émergents secondaires d'une pluralité de canaux d'un dispositif LiDAR multicanaux de manière répartie dans le temps pendant un cycle de fonctionnement du dispositif LiDAR multicanaux (S201) ; et
selon un résultat de détection des lasers émergents secondaires de la pluralité de canaux, émettre un laser émergent primaire à un moment de référence prédéfini du canal ou coder et moduler l'émission du laser émergent primaire (S202),
**caractérisé en ce que**
l'étape d'émission du laser émergent primaire au moment de référence prédéfini du canal ou de codage et modulation de l'émission du laser émergent primaire comprend les étapes consistant à :
déterminer un mode de fonctionnement du laser émergent primaire d'un canal selon le résultat de détection du laser émergent secondaire correspondant, et obtenir les modes de fonctionnement des lasers émergents primaires de tous les canaux ;
lorsque le laser émergent primaire du canal adopte un mode de fonctionnement à courte portée, émettre le laser émergent primaire au moment de référence prédéfini du canal ; et
lorsque le laser émergent primaire du canal adopte un mode de fonctionnement à longue portée, coder et moduler l'émission du laser émergent primaire, et
l'étape de codage et modulation de l'émission du laser émergent primaire comprend les étapes consistant à :
obtenir un deuxième moment, qui est le début d'une région de codage, la durée de la région de codage étant d'une longueur aléatoire ;
commander au canal de démarrer une charge d'énergie primaire-longue après la région de codage ;
démarrer un transfert d'énergie primaire-longue du canal après la charge d'énergie primaire-longue ; et
commander au canal de démarrer une activation d'énergie primaire-longue après le transfert d'énergie primaire-longue du canal, et émettre, par le canal, le laser émergent primaire.

2. Procédé de commande selon la revendication 1, dans lequel l'étape de commande de l'émission des lasers émergents secondaires de la pluralité de canaux du dispositif LiDAR multicanaux de manière répartie dans le temps comprend l'étape consistant à :
commander que les lasers émergents secondaires de la pluralité de canaux soient émis à un intervalle d'un premier temps prédéfini.

3. Procédé de commande selon la revendication 2, dans lequel l'étape de commande que les lasers émergents secondaires de la pluralité de canaux soient émis à l'intervalle du premier temps prédéfini comprend les étapes consistant à :
à un premier moment, commander à chacun des canaux de démarrer une charge d'énergie d'émission secondaire ;
démarrer un transfert d'énergie d'émission secondaire de chacun des canaux après la charge d'énergie d'émission secondaire ;
après le transfert d'énergie d'émission secondaire de chacun des canaux, commander à chacun des canaux séquentiellement de démarrer une activation d'énergie d'émission secondaire, et émettre, par le canal, le laser émergent secondaire, un intervalle entre l'activation d'énergie d'émission secondaire de canaux adjacents étant le premier temps prédéfini.

4. Procédé de commande selon la revendication 3, dans lequel :
une durée d'une région d'analyse d'émission secondaire de chacun des canaux est un deuxième temps prédéfini, et le premier temps prédéfini est supérieur ou égal au deuxième temps prédéfini.

5. Procédé de commande selon la revendication 1, dans lequel les étapes de détermination du mode de fonctionnement du laser émergent primaire du canal selon le résultat de détection correspondant du laser émergent secondaire et d'obtention des modes de fonctionnement des lasers émergents primaires de tous les canaux comprennent les étapes consistant à :
lorsque le résultat de détection du laser émergent secondaire du canal est qu'aucun laser de réflexion n'est reçu ou qu'un moment de réception d'un laser de réflexion est supérieur à un troisième moment, déterminer que le laser émergent primaire du canal correspondant adopte le mode de fonctionnement à longue portée ;
lorsque le résultat de détection du laser émergent secondaire du canal est qu'un moment de réception du laser de réflexion est inférieur ou égal au troisième moment, déterminer que le laser émergent primaire du canal correspondant adopte le mode de fonctionnement à courte portée.

6. Procédé de commande selon la revendication 1, dans lequel l'étape d'émission du laser émergent primaire au moment de référence prédéfini du canal comprend les étapes consistant à :
obtenir un deuxième moment, et commander au canal de démarrer une charge d'énergie primaire-courte du canal au deuxième moment ;
démarrer un transfert d'énergie primaire-courte du canal après la charge d'énergie primaire-courte ;
démarrer une activation d'énergie primaire-courte à un moment de référence prédéfini du canal après le transfert d'énergie primaire-courte du canal, et émettre, par le canal, le laser émergent primaire,
dans lequel chacun des canaux se voit prédéfinir un moment de référence, et un intervalle entre les moments de référence correspondant à des canaux adjacents parmi les canaux est un troisième temps prédéfini.

7. Procédé de commande selon la revendication 6, dans lequel :
une durée d'une région d'analyse d'émission primaire du mode de fonctionnement à courte portée est un quatrième temps prédéfini, et le troisième temps prédéfini est supérieur ou égal au quatrième temps prédéfini.

8. Dispositif de commande pour émission laser multicanaux, comprenant :
un premier module de commande, configuré pour commander séquentiellement l'émission de lasers émergents secondaires d'une pluralité de canaux d'un dispositif LiDAR multicanaux de manière répartie dans le temps pendant un cycle de fonctionnement du dispositif LiDAR multicanaux ; et
un deuxième module de commande, configuré pour, selon un résultat de détection des lasers émergents secondaires de la pluralité de canaux, émettre un laser émergent primaire à un moment de référence prédéfini du canal ou coder et moduler l'émission du laser émergent primaire,
**caractérisé en ce que**
l'étape d'émission du laser émergent primaire au moment de référence prédéfini du canal ou de codage et modulation de l'émission du laser émergent primaire comprend les étapes consistant à :
déterminer un mode de fonctionnement du laser émergent primaire d'un canal selon le résultat de détection du laser émergent secondaire correspondant, et obtenir les modes de fonctionnement des lasers émergents primaires de tous les canaux ;
lorsque le laser émergent primaire du canal adopte un mode de fonctionnement à courte portée, émettre le laser émergent primaire au moment de référence prédéfini du canal ; et
lorsque le laser émergent primaire du canal adopte un mode de fonctionnement à longue portée, coder et moduler l'émission du laser émergent primaire, et
l'étape de codage et modulation de l'émission du laser émergent primaire comprend les étapes consistant à :
obtenir un deuxième moment, qui est le début d'une région de codage, la durée de la région de codage étant d'une longueur aléatoire ;
commander au canal de démarrer une charge d'énergie primaire-longue après la région de codage ;
démarrer un transfert d'énergie primaire-longue du canal après la charge d'énergie primaire-longue ; et
commander au canal de démarrer une activation d'énergie primaire-longue après le transfert d'énergie primaire-longue du canal, et émettre, par le canal, le laser émergent primaire.

9. Dispositif LiDAR multicanaux, comprenant :
un processeur ; et
une mémoire sur laquelle sont stockés des codes exécutables, lesquels, lorsqu'ils sont exécutés par le processeur, amènent le processeur à exécuter le procédé selon l'une quelconque des revendications 1 à 7.

10. Support de stockage lisible par ordinateur sur lequel sont stockés des codes exécutables, lesquels, lorsqu'ils sont exécutés par un processeur d'un dispositif LiDAR multicanaux, amènent le processeur à exécuter le procédé selon l'une quelconque des revendications 1 à 7.
